# EUROPÄISCHE PATENTSCHRIFT

(11) **EP 1 203 042 B1**
(45) Veröffentlichungstag und Bekanntmachung des Hinweises auf die Patenterteilung: **26.01.2005**
(21) Anmeldenummer: 00947940.3
(22) Anmeldetag: 06.07.2000
(51) Int. Cl.: C08G 64/04

(54) **POLYCARBONAT UND DESSEN FORMKÖRPER**
POLYCARBONATE AND MOLDED POLYCARBONATE ARTICLES
POLYCARBONATE ET ARTICLES MOULES EN POLYCARBONATE

(30) Priorität: 19.07.1999 DE 19933128
(43) Veröffentlichungstag der Anmeldung: 08.05.2002
(73) Patentinhaber: Bayer MaterialScience AG, 51368 Leverkusen (DE)
(72) Erfinder: KRATSCHMER, Silke, D-47829 Krefeld (DE); HUCKS, Uwe, D-46519 Alpen (DE); BUNZEL, Lothar, D-47906 Kempen (DE)
(86) Internationale Anmeldenummer: PCT/EP2000/006377
(87) Internationale Veröffentlichungsnummer: WO 2001/005867

(56) Entgegenhaltungen:
- EP-A- 0 337 207
- EP-A- 0 685 503
- US-A- 4 608 430

## Beschreibung

Gegenstand der vorliegenden Erfindung ist ein neues Polycarbonat und seine Verwendung als Material zur Herstellung von Formkörpern und Halbzeugen, besonders für transparente Anwendungen, wie Datenspeicher oder Audio-Compact-Discs, Platten, Stegplatten, Folien, Lampengehäuse, Verscheibungen, insbesondere Automobilverscheibungen, Streuscheiben, aber auch für elektrische Anwendungen oder den Hausbau. Gegenstand der vorliegenden Erfindung ist weiterhin ein Verfahren zur Herstellung des Polycarbonats.

Die Herstellung von aromatischen Polycarbonaten nach dem Schmelzeumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie ausgehend von der DE 1 031 512 in einigen Patenten beschrieben.

In der EP-B-360 578 sind Polycarbonate mit von Phenol verschiedenen Endgruppen beschrieben. Die gemäß der EP 360 578 erhaltenen Polycarbonate haben einen gegenüber den in Lösung synthetisierten Polycarbonaten einen deutlich erhöhten Gehalt an Fehlstrukturen. Als Folge dessen besitzen derartige Materialien Nachteile in der Schmelzestabilität, der Thermostabilität und der Farbkonstanz.

Die Aufgabe bestand also darin, Polycarbonate und ein Verfahren zu ihrer Herstellung zu entwickeln, die über größere Stabilität verfügen.

Die Aufgabe wurde gelöst durch die Synthese von Polycarbonaten mit einer deutlich verringerten Konzentration an Fehlstrukturen.

Gegenstand der vorliegenden Erfindung ist ein lösungsmittelfreies Umesterungsverfahren zur Herstellung von verzweigungsarmen, thermoplastischen aromatischen Polycarbonaten mit Gewichtsmittelmolekulargewichten M_{w} zwischen 2 000 und 150 000, vorzugsweise zwischen 4 500 und 55 000, auf Basis von Diphenolen, Kettenabbrechern der Formel (I) 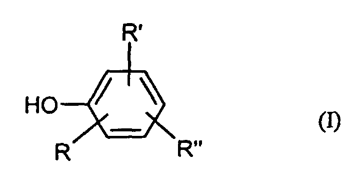 worin R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können und gegebenenfalls Verzweigern,
dadurch gekennzeichnet, dass als Katalysator Phosphoniumsalze verwendet werden und in welchen der Gehalt an Formel (II) im Polycarbonat 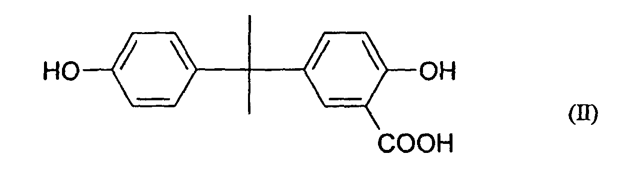 einen Wert nach Totalverseifung und HPLC-Bestimmung von kleiner 300 ppm aufweist.

Die erfindungsgemäßen Polycarbonate zeigen im Vergleich zu üblicherweise fehlstrukturierten Polycarbonaten eine wesentlich erhöhte Hydrolysefestigkeit und eine verbesserte kritische Dicke bei sonst vergleichbaren mechanischen und thermischen Eigenschaften.

Die erfindungsgemäßen Polycarbonate werden aus Dihydroxyverbindungen, Dicarbonaten, Kettenabbrechern und gegebenenfalls Verzweigern in der Schmelze hergestellt.

Kettenabbrecher im Sinne der Erfindung sind solche der Formel (I). 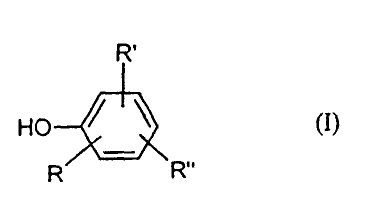 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise
o-n-Butylphenol, m-n-Butylphenol, p-n-Butylphenol,
o-Isobutylphenol, m-Isobutylphenol, p-Isobutylphenol,
o-tert-Butylphenol, m-tert-Butylphenol, p-tert-Butylphenol,
o-n-Pentylphenol, m-n-Pentylphenol, p-n-Pentylphenol,
o-n-Hexylphenol, m-n-Hexylphenol, p-n-Hexylphenol,
o-Cyclohexylphenol, m-Cyclohexylphenol, p-Cyclohexylphenol,
o-Phenylphenol, m-Phenylphenol, p-Phenylphenol,
o-Isooctylphenol, m-Isooctylphenol, p-Isooctylphenol,
o-n-Nonylphenol, m-n-Nonylphenol, p-n-Nonylphenol,
o-Cumylphenol, m-Cumylphenol, p-Cumylphenol,
o-Naphthylphenol, m-Naphthylphenol. p-Naphthylphenol,
2,5-Di-tert-Butylphenol, 2,4-Di-tert-Butylphenol, 3,5-Di-tert-Butylphenol,
2,5-Dicumylphenol, 3,5-Dicumylphenol,
4-Phenoxyphenol, 2- Phenoxyphenol, 3- Phenoxyphenol,
3-Pentadecylphenol, 2-Pentadecylphenol, 4-Pentadecylphenol,
2-Phenylphenol, 3-Phenylphenol, 4-Phenylphenol,
Tritylphenol, 3-Triphenylmethylphenol, 2-Triphenylmethylphenol,
weiterhin Benzotriazolderivate der allgemeinen Formel (III) 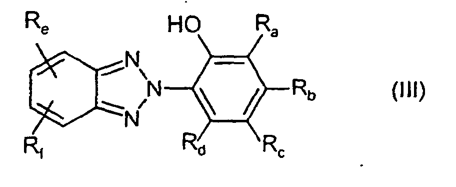 mit der obigen Bedeutung von R, R' und R" für Rₐ- R_{f}
und Chromanverbindungen wie 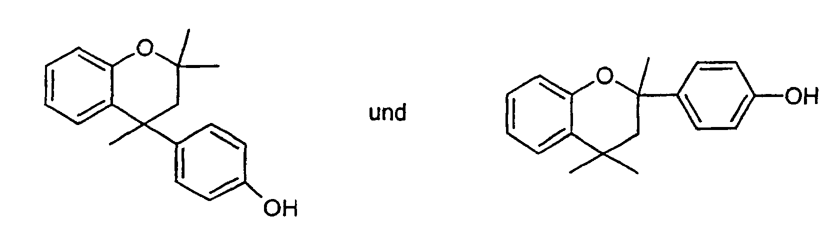 bevorzugt schwersiedende Phenole wie Tritylphenol, Cumylphenol, Pentadecylphenol oder Chromane,
oder auch als unter den Synthesebedingungen umesterungsfähige Verbindungen wie z. B. Carbonate, Oxalate, o-Carbonsäureester o. ä., bevorzugt sind die freien Phenole oder die Kohlensäurediester der Formel (IV) 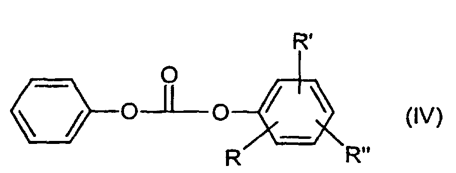 und Formel (V), 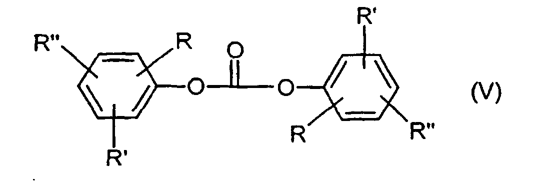 wobei R,R' und R" denen der Formel (I) entsprechen. Phenole oder umesterungsaktive Substanzen können einzeln oder im Gemisch der Synthese zugesetzt werden. Bevorzugte Mischungen sind solche mit Diphenylcarbonat. Es besteht die Möglichkeit, das Phenol oder die phenoltragende Verbindung zu jedem Zeitpunkt der Reaktion zuzugeben, bevorzugt zu Beginn der Reaktion, und die Zugabe kann in mehrere Portionen aufgeteilt werden. Der gesamte Anteil an Kohlensäureester beträgt 100 - 130 mol%, bevorzugt 103 - 120 mol%, bezogen auf die Dihydroxyverbindung.

Für die Herstellung von Polycarbonaten nach dem erfindungsgemäßen Verfahren kann ein Kettenabbrecher oder aber auch ein Gemisch aus mehreren Kettenabbrechem verwendet werden, so dass im erfindungsgemäßen Polycarbonat Phenol, aber auch Phenol neben anderen Kettenabbrechern als Endgruppe vorliegen kann. Bevorzugt werden 0,4 - 17 mol%, besonders bevorzugt 1,3 - 8,6 mol% (bezogen auf die Dihydroxyverbindung) an Kettenabbrecher zugegeben. Dabei kann die Zugabe sowohl vor der Reaktion als auch ganz oder teilweise während der Reaktion erfolgen.

Dihydroxyverbindungen im Sinne der Erfindung sind solche der Formel (VI)

HO-Z-OH (VI)

in denen Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyverbindungen der Formel (VI) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'- Bis-(hydroxyphenyl)-diisopropylbenzole
sowie deren kemalkylierte und kernhalogenierte Verbindungen.

Diese und weitere geeignete andere Diphenole sind z. B. in den US-PS 3 028 365, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964" beschrieben.

Bevorzugte Diphenole sind beispielsweise:
4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
α,α'- Bis-(4-hydroxyphenyl)-p-diisopropylbenzol,
α,α'- Bis-(4-hydroxyphenyl)-m-diisopropylbenzol,
Bis-(4-hydroxyphenyl)sulfon,
Bis-(4-hydroxyphenyl)methan,
1,1-Bis-(4-hydroxyphenyl)-3,3,5-trimethylcyclohexan,
2,2-Bis-(2,6-dimethyl-4-hydroxyphenyl)propan,
2,2-Bis-(4-hydroxyphenyl)hexafluorpropan,
1,1-(4-Hydroxyphenyl)-1-phenylethan,
Bis-(4-Hydroxyphenyl)diphenylmethan,
Dihydroxydiphenylether,
4,4'-Thiobisphenol,
1,1-Bis-(4-Hydroxyphenyl)-1-(1-naphthyl)ethan,
1,1-Bis-(4-Hydroxyphenyl)-1-(2-naphthyl)ethan,
2,3-Dihydroxy-3-(4-hydroxyphenyl)-1,1,3-trimethyl-1*H*-inden-5-ol,
2,3-Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol.

Besonders bevorzugt sind
Resorcin,
1,1-Bis-(4-Hydroxyphenyl)-1-(1-naphthyl)ethan,
1,1-Bis-(4-Hydroxyphenyl)-1-(2-naphthyl)ethan,
2,2-Bis-(4-hydroxyphenyl)propan,
α,α'- Bis-(4-hydroxyphenyl)-p-diisopropylbenzol,
α,α'- Bis-(4-hydroxyphenyl)-m-diisopropylbenzol,
1,1-Bis-(4-hydroxyphenyl)cyclohexan,
1,1-Bis-(4-hydroxyphenyl)-3,3,5-trimethylcyclohexan,
Bis-(4-Hydroxyphenyl)diphenylmethan.
4,4'-Dihydroxydiphenyl

Es können sowohl ein Diphenol der Formel (VI) unter Bildung von Homopolycarbonaten als auch mehrere Diphenole der Formel (VI) unter Bildung von Copolycarbonaten verwendet werden.

Verzweigungsarm im Sinne der Erfindung heißt, dass der Gehalt an Formel (II) im Polycarbonat einen Wert nach Totalverseifung und HPLC-Bestimmung von weniger als 300 ppm, bevorzugt zwischen 0,03 ppm und 250 ppm, aufweist.

Die Polycarbonate können durch den Einsatz geringer Mengen von 0,02 bis 3,6 mol% (bezogen auf die Dihydroxyverbindung) Verzweiger bewusst und kontrolliert verzweigt werden. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen.

Beispiele für geeignete Verzweiger sind
Phloroglucin,
4,6-Dimethyl-2,4,6-tri-(4-hydroxyphenyl)heptan,
1,3,5-Tri-(4-hydroxyphenyl)benzol,
1,1,1-Tri-(4-hydroxyphenyl)ethan,
Tri-(4-hydroxyphenyl)phenylmethan,
2,2-Bis-[4,4-bis(4-hydroxyphenyl)cyclohexyl]propan,
2,4-Bis-(4-hydroxyphenyl-isopropyl)phenol,
2,6-Bis-(2-hydroxy-5-methylbenzyl)-4-methylphenol,
2-(4-Hydroxyphenyl)-2-(2,4-dihydroxyphenyl)propan,
Hexa-[4-(4-hydroxyphenyl-isopropyl)phenyl]orthoterephthalsäureester,
Tetra-(4-hydroxyphenyl)methan,
Tetra-[4-(4-hydroxyphenyl-isopropyl)phenoxy]methan,
1,4-Bis-[4',4"-dihydroxytriphenyl)methyl]benzol,
α,α',α"-Tris-(4-hydroxyphenyl)-1,3,4-triisopropenylbenzol,
Isatinbiskresol,
Pentaerythrit,
2,4-Dihydroxybenzoesäure,
Trimesinsäure,
Cyanursäure.

Besonders bevorzugt sind 1,1,1-Tri-(4-hydroxyphenyl)ethan und Isatinbiskresol.

Als Katalysator für die Herstellung der erfindungsgemäßen Polycarbonate können Phosphoniumsalze verwendet werden, gegebenenfalls in Kombination mit anderen geeigneten Katalysatoren, die nicht zu Fehlstrukturen wie Formel (II) führen, wie z.B. andere Oniumverbindungen.

Phosphoniumsalze im Sinne der Erfindung sind solche der Formel (VII), 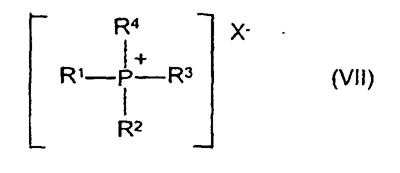 wobei R¹⁻⁴ dieselben oder verschiedene C₁-C₁₈-Alkyle, C₆-C₁₄-Aryle, C₇-C₁₂-Aralkyle oder C₅-C₆-Cycloalkyle sein können, bevorzugt Methyl oder C₆-C₁₄-Aryle, besonders bevorzugt Methyl oder Phenyl, und X⁻ ein Anion wie Sulfat, Hydrogensulfat, Hydrogencarbonat, Carbonat, Acetat, Boranat, Hydrogenphosphate, ein Halogenid, bevorzugt Fluorid, Chlorid oder Bromid, ein Alkoholat der Formel OR sein kann, wobei R C₆-C₁₄-Aryl oder C₇-C₁₂-Aralkyl, bevorzugt Phenyl sein kann.

Bevorzugte Katalysatoren sind
Tetraphenylphosphoniumfluorid,
Tetraphenylphosphoniumtetraphenylboranat,
besonders bevorzugt Tetraphenylphosphoniumphenolat.

Die Herstellung der erfindungsgemäßen Polycarbonate erfolgt beispielsweise derart, dass in der ersten Stufe das Aufschmelzen der Diphenole, der Kohlensäurediester, des Katalysators und gegebenenfalls der Alkylphenole und Verzweiger bei Temperaturen von 75°C bis 225°C, vorzugsweise von 105°C bis 235°C, besonders bevorzugt von 120°C bis 190°C, unter normalem Druck in 0,1 bis 5 Stunden, bevorzugt in 0,25 bis 3 Stunden erfolgt. Dann wird durch Anlegen von Vakuum und Erhöhung der Temperatur durch Abdestillieren des Monophenols das Oligocarbonat hergestellt. Im letzten Schritt wird bei der Polykondensation durch weiteres Erhöhen der Temperatur auf 240°C bis 325°C und bei einem Druck von < 2 mbar das Polycarbonat hergestellt.

Bei der Herstellung von Polycarbonaten nach dem Schmelzeumesterungsverfahren kann die Reaktion des Bisphenols und des Kohlensäurediesters kontinuierlich oder diskontinuierlich beispielsweise in Rührkesseln, Dünnschichtverdampfern, Fallfilmverdampfern, Rührkesselkaskaden, Extrudern, Knetem, einfachen Scheibenreaktoren und Hochviskosscheibenreaktoren durchgeführt werden.

Die Isolierung der erfindungsgemäßen Polycarbonate erfolgt ebenfalls in bekannter Weise, beispielsweise durch Austragen, Abspinnen und Granulierung.

Die erfindungsgemäßen Polycarbonate können Gewichtsmittelmolekulargewichte M_{w} zwischen etwa 2 000 und 150 000, vorzugsweise zwischen etwa 4 500 und 55 000 haben, wobei M_{w} über die relative Lösungsviskosität in Dichlormethan oder in Mischungen gleicher Gewichtsmengen Phenol/o-Dichlorbenzol ermittelt wird, wobei die Eichung durch Lichtstreuung erfolgt.

Die erfindungsgemäßen Polycarbonate weisen die üblichen literaturbekannten OH-Endgruppengehalte auf, die photometrisch mit Titantetrachlorid ermittelt werden können.

Die erfindungsgemäßen Polycarbonate sind bei Temperaturen von 260°C bis 320°C in üblicher Weise thermoplastisch verarbeitbar. Durch Spritzguss oder via Extrusion können beliebige Formkörper und Folien in bekannter Weise hergestellt werden.

Die erfindungsgemäßen Polycarbonate sind in Lösungsmitteln wie chlorierten Kohlenwasserstoffen, z.B. Methylenchlorid, gut löslich und können somit beispielsweise in bekannter Weise zu Gießfolien verarbeitet werden.

Gegenstand der Erfindung ist daher auch ein Verfahren zur Herstellung der verzweigungsarmen erfindungsgemäßen Polycarbonate, dadurch gekennzeichnet, dass als Katalysator Phosphoniumsalze der Formel (VII) in Konzentrationen von 10⁻² mol bis 10⁻⁶ mol, bezogen auf 1 mol Diphenol, verwendet werden, gegebenenfalls in Kombination mit anderen geeigneten Katalysatoren, die nicht zu Fehlstrukturen wie Formel (II) führen, wie z. B. andere Oniumverbindungen.

Zur Verbesserung der Eigenschaften können den erfindungsgemäßen Polycarbonaten Hilfs- und Verstärkungsstoffe zugemischt werden. Als solche sind u. a. in Betracht zu ziehen: Stabilisatoren, Fließhilfsmittel, Entformungsmittel, Brandschutzmittel, Pigmente, fein zerteilte Mineralien, Faserstoffe, z. B. Alkyl- und Arylphosphite, - phosphate, -phosphane, niedermolekulare Carbonsäureester, Halogenverbindungen, Salze, Kreide, Quarzmehl, Glas- und Kohlenstoffasern, Pigmente und deren Kombination.

Weiterhin können den erfindungsmäßen Polycarbonaten auch andere Polymere zugemischt werden, z. B. Polyolefine, Polyurethane, Polyester und Polystyrol.

Hervorragende Eigenschaften werden mit diesem Material auch in Formkörpern erzielt.

Weiterer Gegenstand der vorliegenden Erfindung ist somit außerdem die Verwendung der erfindungsgemäßen verzweigungsarmen, lösungsmittelfreien, aromatischen, Polycarbonate zur Herstellung von Formkörpern und Halbzeugen, besonders für transparente Anwendungen, wie Datenspeicher oder Audio-Compact-Discs, Platten, Stegplatten, Folien, Lampengehäuse, Verscheibungen, insbesondere Automobilverscheibungen, Streuscheiben, aber auch für elektrische Anwendungen oder den Hausbau.

### Beispiele

### Vergleichsbeispiel 1

In einem 500 ml Dreihalskolben mit Rührer, Innenthermometer und Vigreuxkolonne (30 cm, verspiegelt) mit Brücke werden 45,60 g (0,2 mol) Bisphenol A, 47,08 g (110 mol% bezogen auf Bisphenol A) Diphenylcarbonat, 3,7 mg (0,03 mol% bezogen auf Bisphenol A) Borsäure und 2,12 g (5 mol% bezogen auf Bisphenol A) 4-Cumylphenol eingewogen. Die Apparatur wird durch Anlegen von Vakuum und Spülen mit Stickstoff (dreimal) vom Luftsauerstoff befreit und das Gemisch bei 180°C aufgeschmolzen und 30 Minuten gerührt. Anschließend werden 36,5 mg (0,03 mol% bezogen auf Bisphenol A) einer 15%igen Ammoniumhydroxid-Lösung und 0,5 mg (0,003 mol% bezogen auf Bisphenol A) Natriumhydrogencarbonat zugegeben und weitere 30 Minuten gerührt. Die Temperatur wird auf 210°C und das Vakuum auf 200 mbar erhöht und das entstehende Phenol abdestilliert. Nach 1 Stunde wird die Temperatur auf 240°C erhöht und nach 20 Minuten das Vakuum auf 150 mbar verbessert. Nach weiteren 20 Minuten wird der Druck auf 100 mbar erniedrigt und 20 Minuten gehalten. Anschließend wird für 30 Minuten der Druck auf 15 mbar reduziert. Nun wird die Temperatur auf 270°C erhöht, das Vakuum auf 0,5 mbar verbessert und nochmals 2 Stunden gerührt. Die Ergebnisse sind in Tabelle 1 zusammengefasst.

### Beispiel 1

Wie Vergleichsbeispiel 1, nur werden statt Tetramethylammoniumhydroxid 4,9 mg (0,004 mol% bezogen auf Bisphenol A) Tetraphenylphosphoniumphenolat (wird als Mischkristall mit 30 Gew.% Phenol bezogen auf den Mischkristall zudosiert) zugegeben. Auf die Zugabe von Natriumhydrogencarbonat und Borsäure wird verzichtet. Die Ergebnisse sind in Tabelle 1 zusammengefasst.

### Beispiel 2

In einem 500 ml Dreihalskolben mit Rührer, Innenthermometer und Vigreuxkolonne (30 cm, verspiegelt) mit Brücke werden 45,66 g (0,2 mol) Bisphenol A, 47,13 g (110 mol% bezogen auf Bisphenol A) Diphenylcarbonat, 4,9 mg (0,004 mol% bezogen auf Bisphenol A) Tetraphenylphosphoniumphenolat (wird als Mischkristall mit 30 Gew.% Phenol bezogen auf den Mischkristall zudosiert) und 2,12 g (5 mol% bezogen auf Bisphenol A) 4-Cumylphenol eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur wird auf 190°C und das Vakuum auf 100 mbar erhöht und das entstehende Phenol abdestilliert. Nach 20 Minuten wird die Temperatur auf 235°C erhöht und das Vakuum auf 60 mbar verbessert. Nach 15 Minuten wird die Temperatur auf 250°C und nach weiteren 15 Minuten das Vakuum auf 5 mbar erhöht. Anschließend wird auf 280°C aufgeheizt und der Druck nach 15 Minuten auf 0,5 mbar reduziert. Nach wiederum 15 Minuten wird bei 300°C nochmals 30 Minuten gerührt. Die Ergebnisse sind in Tabelle 1 zusammengefasst.

### Beispiel 3

In einem 500 ml Dreihalskolben mit Rührer, Innenthermometer und Vigreuxkolonne (30 cm, verspiegelt) mit Brücke werden 45,66 g (0,2 mol) Bisphenol A, 47,13 g (110 mol% bezogen auf Bisphenol A) Diphenylcarbonat, 4,9 mg (0,004 mol% bezogen auf Bisphenol A) Tetraphenylphosphoniumphenolat (wird als Mischkristall mit 30 Gew.% Phenol bezogen auf den Mischkristall zudosiert) und 3,05 g (5 mol% bezogen auf Bisphenol A) 3-Pentadecylphenol eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur wird auf 190°C und das Vakuum auf 100 mbar erhöht und das entstehende Phenol abdestilliert. Nach 30 Minuten wird die Temperatur auf 235°C erhöht, nach weiteren 30 Minuten auf 300°C. Das Vakuum wird langsam auf 0,5 mbar reduziert und weitere 30 Minuten gerührt. Die Ergebnisse sind in Tabelle 1 zusammengefasst.

### Beispiel 4

1141,47 g (5 mol) Bisphenol A, 1113,94 g (104 mol% bezogen auf Bisphenol A) Diphenylcarbonat und 122,5 mg (0,004 mol% bezogen auf Bisphenol A) Tetraphenylphosphoniumphenolat (wird als Mischkristall mit 30 Gew.% Phenol bezogen auf den Mischkristall zudosiert) werden in einen Rührbehälter eingewogen. Der Behälter wird durch Anlegen von Vakuum und Spülen mit Stickstoff (dreimal) vom Luftsauerstoff befreit und das Gemisch bei 150°C aufgeschmolzen. Die Temperatur wird auf 190°C und das Vakuum auf 100 mbar erhöht und das entstehende Phenol abdestilliert. Nach 60 Minuten wird die Temperatur auf 235°C erhöht, nach weiteren 30 Minuten wird das Vakuum wird langsam auf 60 mbar reduziert und weitere 15 Minuten gerührt. Anschließend wird auf 250°C erhitzt und nach 15 Minuten der Druck noch kurzzeitig auf 5 mbar erniedrigt. Die Ergebnisse sind in Tabelle 1 zusammengefasst.

**Tabelle 1**

| | Kettenabbrecher | Formel (II) [ppm] | Lösungsviskosität |
|---|---|---|---|
| Vergleichs-beispiel 1 | Cumylphenol/Phenol | 303 | 1,142 |
| Beispiel 1 | Cumylphenol/Phenol | 70 | 1,160 |
| Beispiel 2 | Cumylphenol/Phenol | 25 | 1,122 |
| Beispiel 3 | Pentadecylphenol/Phenol | 86 | 1,161 |
| Beispiel 4 | Phenol | 12 | 1,124 |

## Patentansprüche

1. Lösungsmittelfreies Umesterungsverfahren zur Herstellung von verzweigungsarmen, thermoplastischen aromatischen Polycarbonaten mit Gewichtsmittelmolekulargewichten M_{w} zwischen 2 000 und 150 000, vorzugsweise zwischen 4 500 und 55 000, auf Basis von Diphenolen, Kettenabbrechern der Formel (I) 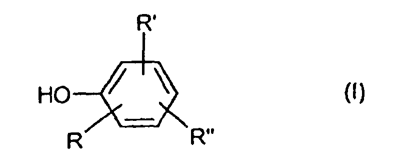 worin R, R' und R" unabhängig voneinander H, gegebenenfalls verzweigte C₁-C₃₄-Alkyl/Cycloalkyl, C₇-C₃₄.-Alkaryl oder C₆-C₃₄-Aryl darstellen können und gegebenenfalls Verzweigern, dadurch gekennzeichet, dass als Katalyator Phosphoniumsalze verwendet werden und in welchen der Gehalt an Formel (II) im Polycarbonat 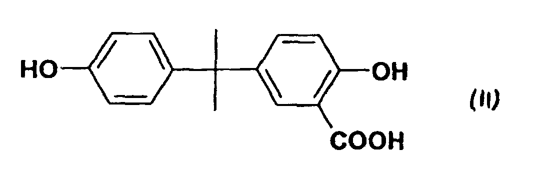 einen Wert nach Totalverseifung und HPLC-Bestimmung von kleiner 300 ppm ausweist.

2. Polycarbonate erhältlich nach Anspruch 1, **dadurch gekennzeichnet, dass** die Endgruppen zu mehr als 30% der umgesetzten Endgruppen aus Alkylphenolendgruppen bestehen.

3. Verfahren nach Anspruch 1, in dem der Katalysator in Konzentrationen von 10⁻² mol bis 10⁻⁶ mol, bezogen auf 1 mol Diphenol, verwendet wird.

4. Verfahren nach Anspruch 1 oder 5, **dadurch gekennzeichnet, dass** der Katalysator Tetraphenylphosphoniumphenolat ist.

5. Verwendung der erfindungsgemäßen verzweigungsarmen, lösungsmittelfreien, aromatischen, Polycarbonate gemäß Anspruch 2 zur Herstellung von Formkörpern und Halbzeugen, besonders für transparente Anwendungen, wie Datenspeicher oder Audio-Compact-Discs, Platten, Stegplatten, Folien, Lampengchäuse, Verscheibungen, insbesondere Automobilverscheibungen, Streuscheiben, aber auch für elektrische Anwendungen oder den Hausbau.

## Claims

1. Solvent-free transesterification process for the preparation of low-branching, thermoplastic, aromatic polycarbonates having weight-average molecular weights M_{w} of between 2000 and 150,000, preferably between 4500 and 55,000, based on diphenols, chain terminators of formula (I) 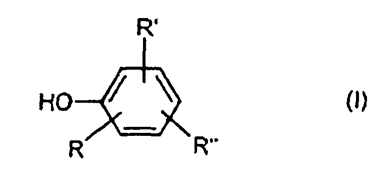 wherein R, R' and R" may each independently of the others represent H, optionally branched C₁-C₃₄-alkyl/cycloalkyl, C₇-C₃₄-alkaryl or C₆-C₃₄-aryl, and, optionally, branching agents, **characterised in that** phosphonium salts are used as catalyst and in which the content of formula (II) in the polycarbonate 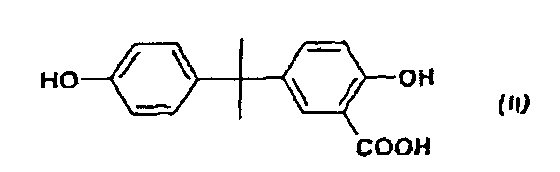 has a value after total saponification and HPLC determination of less than 300 ppm.

2. Polycarbonates obtainable according to claim 1, **characterised in that** the end groups consist of alkylphenol end groups to the extent of more than 30% of the reacted end groups.

3. Process according to claim 1, in which the catalyst is used in concentrations of from 10⁻² mol to 10⁻⁶ mol, based on 1 mol of diphenol.

4. Process according to claim 1 or 5, **characterised in that** the catalyst is tetraphenylphosphonium phenolate.

5. Use of the low-branching, solvent-free, aromatic polycarbonates according to the invention according to claim 2, for the production of moulded bodies and semi-finished products, especially for transparent applications, such as data stores or audio compact disks, sheets, multi-wall sheets, films, lamp housings, panes, especially panes for motor vehicles, headlamp lenses, but also for electrical applications or house building.

## Revendications

1. Procédé de transestérification sans solvant pour la préparation de polycarbonates aromatiques thermoplastiques, pauvres en ramification, avec des poids moléculaires moyens en poids Mw allant de 2000 à 150 000, de préférence de 4500 à 55 000, à base de diphénols, d'agents d'interruption de chaîne de la formule (I) : 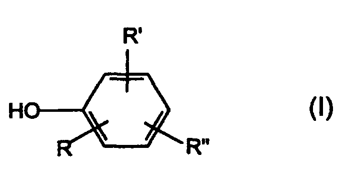 où R, R' et R'' peuvent représenter indépendamment l'un de l'autre H, un radical alkyle/cycloalkyle C₁-C₃₄ le cas échéant ramifié, un radical alkaryle en C₇-C₃₄ ou un radical aryle en C₆-C₃₄, et le cas échéant, d'agents de ramification, **caractérisé en ce que** comme catalyseur, on utilise des sels de phosphonium et dans lequel la teneur en formule (II) dans le polycarbonate : 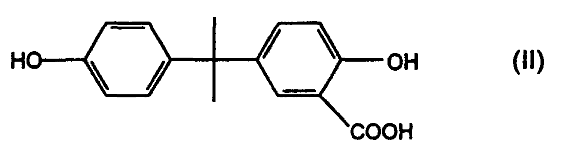 présente une valeur inférieure à 300 ppm par saponification totale et détermination HPLC.

2. Polycarbonates obtenus suivant la revendication 1, **caractérisés en ce que** les radicaux terminaux consistent pour plus de 30% des radicaux terminaux ayant réagi, en des radicaux terminaux alkylphénol.

3. Procédé suivant la revendication 1, dans lequel le catalyseur est utilisé en des concentrations allant de 10⁻² mole à 10⁻⁶ mole, sur base de 1 mole de diphénol.

4. Procédé suivant la revendication 1 ou 3, **caractérisé en ce que** le catalyseur est le phénolate de tétraphénylphosphonium.

5. Utilisation des polycarbonates aromatiques pauvres en ramification, exempts de solvant, suivant la revendication 2, pour la préparation d'articles moulés et de produits semi-finis, en particulier pour des utilisations transparentes, comme des mémoires d'information ou des disques compacts audio, des plaques, des tuiles à nervures, des feuilles, des boîtiers de lampe, des vitrages, en particulier des vitrages d'automobiles, des verres diffusants, mais également pour des utilisations électriques ou la construction.
